Europäisches Patentamt

European Patent Office

Office européen des brevets

(19)

(11) EP 0 855 616 B1

(12) **FASCICULE DE BREVET EUROPEEN**

(45) Date de publication et mention
de la délivrance du brevet:
**02.04.2003 Bulletin 2003/14**

(51) Int Cl.⁷: $G02F\ 1/39$

(21) Numéro de dépôt: **98400128.9**

(22) Date de dépôt: **22.01.1998**

(54) **Oscillateur paramétrique optique impulsionnel monomode**

Gepulster optischer parametrischer Oszillator in Einzelmodebetrieb

Monomode pulsed optical parametric oscillator

(84) Etats contractants désignés:
**DE FR GB**

(30) Priorité: **24.01.1997 FR 9700774**

(43) Date de publication de la demande:
**29.07.1998 Bulletin 1998/31**

(73) Titulaire: **OFFICE NATIONAL D'ETUDES ET DE
RECHERCHES AEROSPATIALES(O.N.E.R.A.)
92320 Chatillon (Hauts de Seine) (FR)**

(72) Inventeurs:
 • **Scherrer, Bruno
 77230 Juilly (FR)**

 • **Lefebvre, Michel
 91400 Orsay (FR)**

(74) Mandataire: **Martin, Jean-Jacques
 Cabinet Régimbeau
 20, rue de Chazelles
 75847 Paris cedex 17 (FR)**

(56) Documents cités:
 **EP-A- 0 742 614          WO-A-94/25896
 US-A- 3 628 182**

## Description

La présente invention est relative aux oscillateurs paramétriques optiques impulsionnels.

DOMAINE TECHNIQUE

On rappelle brièvement ci-après les caractéristiques principales des oscillateurs paramétriques optiques (OPO).

Le processus de conversion paramétrique consiste à générer, à partir d'un rayonnement laser dit de pompe (fréquence $\omega_p$), deux ondes cohérentes aux fréquences appelées signal ($\omega_s$) et complémentaire ($\omega_c$), telles que :

$$\omega_p = \omega_s + \omega_c \tag{1}$$

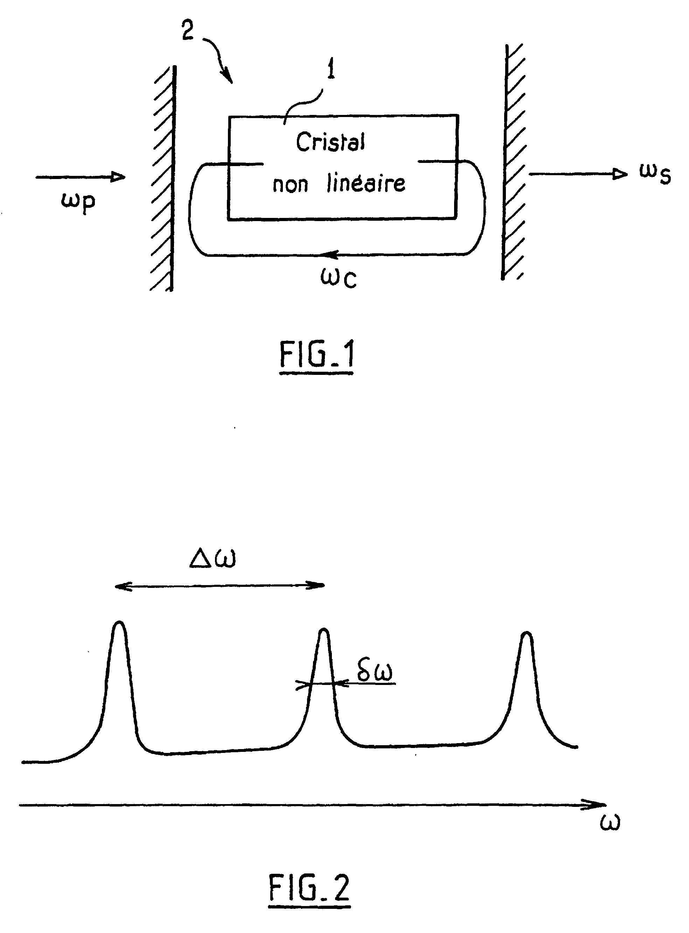

Dans le cas d'un OPO, la conversion paramétrique est réalisée, ainsi qu'illustrée sur la figure 1, dans un cristal 1 non linéaire d'ordre 2 qui est placé à l'intérieur d'une cavité optique 2.

Dans le cas le plus simple, la cavité 2 est constituée de deux miroirs plans parallèles dont les surfaces sont traitées pour réfléchir l'une des ondes, par exemple l'onde complémentaire, l'onde signal étant alors disponible à l'extérieur de la cavité ; cette configuration est appelée simplement résonnante.

Un OPO peut également fonctionner dans une configuration dite doublement résonnante, où les miroirs sont traités pour réfléchir totalement l'une des ondes et partiellement l'autre. Les deux arrangements se distinguent, en particulier, par leur seuil d'oscillation qui est défini classiquement comme l'intensité de pompe minimale qu'il faut appliquer au cristal pour compenser les pertes de la cavité. L'arrangement doublement résonnant permet d'obtenir le seuil d'oscillation le plus faible car cette géométrie permet d'atteindre un coefficient d'amplification paramétrique ou gain paramétrique le plus élevé. Le gain paramétrique est ici défini comme étant le rapport de l'intensité de l'onde signal après une traversée du cristal sur l'intensité de l'onde signal avant la traversée du cristal.

Suivant les propriétés de biréfringence du cristal utilisé, on accorde généralement la fréquence émise par un OPO soit en ajustant l'orientation du cristal par rapport à la direction des faisceaux optiques (on parle alors d'un accord de phase critique en angle), soit en modifiant la température du cristal (accord de phase non critique).

Il convient de distinguer le fonctionnement des OPO en régime continu de celui obtenu en régime impulsionnel.

En régime continu, c'est-à-dire lorsque le rayonnement de pompe appliqué au cristal est issu d'un laser continu, donc de faible puissance, le gain paramétrique est faible. Afin d'atteindre le seuil d'oscillation de l'OPO, on utilise généralement des configurations à cavité doublement résonnante, avec un cristal aussi long que possible, en mettant en oeuvre un ou plusieurs aller-retour du faisceau de pompe dans la cavité (fonctionnement triplement résonnant).

On notera que, malgré ces dispositions, dans le cas des OPO continus, la faible valeur du gain paramétrique ne permet d'établir l'oscillation dans la cavité qu'à une seule fréquence ce qui conduit naturellement à une émission spectralement pure.

Pour un exemple d'OPO continu à cavité doublement résonnante, on pourra avantageusement se référer à la publication :

[1] "Continuous-wave, dual-cavity, doubly resonant, optical parametric oscillator", Colville F.G., Padgett M.J., and Dunn M.H., appl. Phys. Lett., Vol. 64 (1994), p 1490,

qui décrit une configuration dans laquelle l'onde complémentaire et l'onde signal sont séparées au moyen d'une lame séparatrice et résonnent dans deux cavités distinctes.

Cette configuration présente l'avantage de permettre des seuils d'oscillation faibles (puissance de pompe de l'ordre de 200mW ou supérieure).

Elle permet également d'accorder continûment la fréquence émise par l'OPO en jouant sur les longueurs des cavités.

En régime impulsionnel, l'intensité de pompe et donc le gain paramétrique sont beaucoup plus élevés. C'est pourquoi une cavité simplement résonnante permet d'atteindre l'oscillation paramétrique. Ainsi, généralement, le problème du seuil d'oscillation ne se pose pas en régime impulsionnel alors qu'il est toujours présent en continu. En revanche, le rayonnement émis par l'OPO n'est jamais pur spectralement car le gain paramétrique est effectif sur une largeur spectrale qui varie de quelques dixièmes à quelques nanomètres, suivant les conditions de polarisation des faisceaux. L'énergie de l'OPO est répartie dans cette largeur spectrale sur plusieurs dizaines de fréquences de résonance que l'on appelle modes longitudinaux. Cette structure de modes est liée à la cavité. En effet, seules les ondes qui après un aller et retour présentent un déphasage multiple de $2\pi$ peuvent résonner dans

la cavité.

Ainsi qu'illustré sur la figure 2, les modes sont écartés en fréquence de la quantité :

$$\Delta\omega = \frac{\Pi C}{L} \qquad (2)$$

où c est la vitesse de la lumière et L la longueur optique de la cavité. Chaque mode a une largeur spectrale finie ($\delta\omega$) ; dans la situation la plus simple d'une cavité passive, c'est-à-dire sans milieu amplificateur, on a :

$$\delta\omega = \frac{\Delta\omega}{F} \qquad (3)$$

où F est la finesse de la cavité qui est d'autant plus grande que les pertes de la cavité sont faibles.

Pour une présentation théorique plus détaillée, on pourra avantageusement se reporter à :

[2] "Interféromètres à ondes multiples", Chapitre VIII, G. Bruhat, Cours de Physique générale, Optique 6ème édition (1992), p. 150.

ETAT DE LA TECHNIQUE

On déduit de ce qui précède que si l'on utilise un OPO à cavité doublement résonnante en régime impulsionnel, le rayonnement émis dépend de la compétition entre les différentes combinaisons des modes à la fréquence signal et à la fréquence complémentaire. Ainsi, le fonctionnement est a priori spectralement particulièrement instable.

[3] "Instabilities in the doubly resonant parametric oscillator : A theorical analysis", Falk J., I.E.E.E. Journal of quantum electronics, Vol. qE 7, n° 6, June 1971, p. 230-235 ;

Or, pour certaines applications, il est nécessaire de pouvoir disposer d'un OPO impulsionnel n'émettant que sur un seul mode.

Ce type de fonctionnement, dit monomode, peut être atteint soit en réduisant la largeur de raie émise par l'OPO au moyen d'un ou plusieurs éléments sélectifs que l'on dispose dans la cavité, soit en utilisant une géométrie de type interférométrique.

Ainsi, à ce jour, les trois types de montages connus pour réaliser des OPO impulsionnels monomodes sont des montages à cavité simplement résonnante à étalons, à réseau ou encore de type interférométrique.

Pour une présentation des montages à étalons, on pourra avantageusement se référer aux publications :

[4] "Single mode oscillation of a pulsed singly resonant optical parametric oscillator", Kreuzer L.B., Appl. Phys. Lett., Vol. 15 (1969), p. 263 ;

[5] "Single-mode KTiOPO$_4$ optical parametric oscillator", Huisken F., Kaloudis M., Marquez J., Churzavkov Yu.L., Orlov S.N., Polivanov Yu. N., Smirnov V.V., Opt. Lett., Vol. 20 (1995), p. 2306,

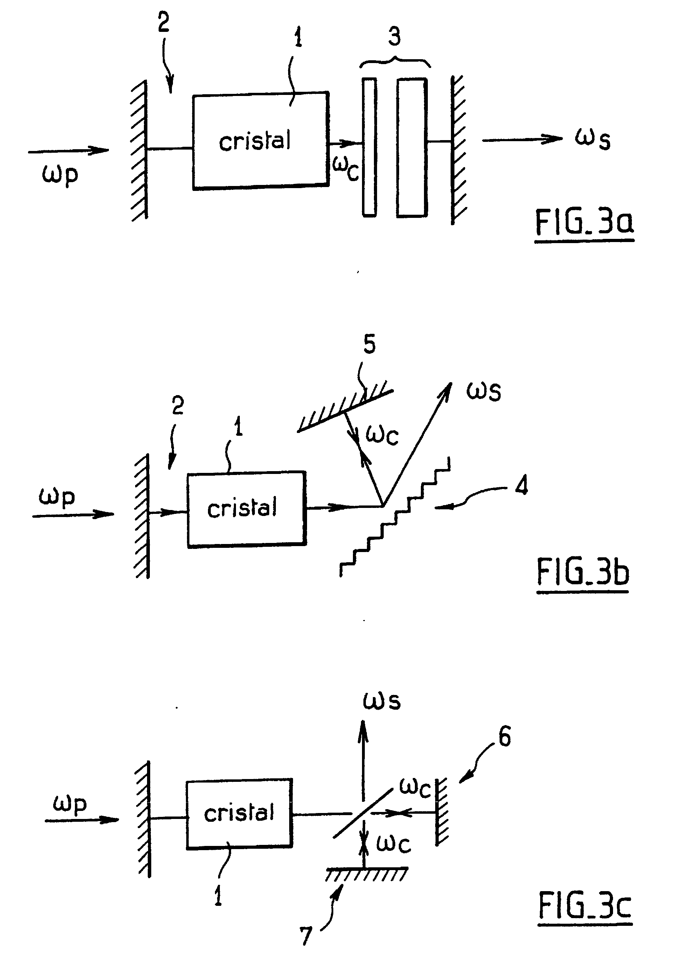

Un tel montage comporte, ainsi qu'on l'a illustré schématiquement sur la figure 3a, un ou plusieurs étalons 3 de type Fabry-Pérot présentant une épaisseur soigneusement choisie.

Le principe d'un montage à réseau (cavité de type Littman) est illustré sur la figure 3b : l'un des miroirs de la cavité est un miroir tournant 5. La sélectivité spectrale est assurée par un réseau 4 qui disperse le rayonnement complémentaire vers ledit miroir tournant.

Pour un exemple de mise en oeuvre d'une cavité de type Littman, on pourra avantageusement se référer à la publication :

[6] "Single-frequency optical parametric oscillator", Bosenberg W.R. and Guyer D.R., Appl. Phys. Lett., Vol. 61 (1992) p. 387.

Toutefois, du fait de l'élévation du seuil d'oscillation qui résulte des pertes introduites par l'élément sélectif, les cavités à étalons Fabry-Pérot ou à réseau ne sont pas pleinement satisfaisantes.

De plus, les composants optiques que constituent de tels éléments sélectifs ont un seuil de dommage relativement bas qui nécessite de les protéger du rayonnement de pompe, ce qui augmente la complexité de l'OPO et aussi son coût.

Par ailleurs, l'utilisation d'étalons Fabry-Pérot rend l'accordabilité en longueur d'onde plus difficile à maîtriser car il est nécessaire d'ajuster simultanément plusieurs paramètres : longueur de la cavité, orientation des étalons et accord de la fréquence centrale de l'OPO.

Les cavités interférométriques (ou de type Fox-Smith) sont sans doute celles qui présentent le moins de perte. Leur principe est quant à lui illustré sur la figure 3c : il s'agit d'une géométrie de cavité à trois miroirs où la sélectivité spectrale est obtenue en ajustant la position relative de deux des trois miroirs de la cavité (miroirs notés 6 et 7 sur la figure 3c).

Toutefois, la mise en oeuvre d'un OPO à cavité interféromètrique nécessite, pour que l'on puisse disposer d'un fonctionnement parfaitement monomode avec des durées d'impulsion de pompe classiques (de l'ordre de la dizaine de nanosecondes, que l'on y intègre un réseau, ce qui présente les inconvénients qui ont été exposés plus haut.

Pour une présentation des OPO à cavité interférométrique, on pourra avantageusement se référer aux publications suivantes :

[7] "Interferometric stabilization of an optical parametric oscillator" Pinard J. and Young J.F., Opt. Comm., Vol. 4, (1972), p. 425 ;

[8] "Highly efficient single-longitudinal-mode $\beta$-BaB$_2$O$_4$ optical parametric oscillator with a new cavity design", Boon-Engering J.M., Gloster L.A.W., Van der Veer W.E., McKinnie I.T., King T.A., Hogervorst W., Opt. Lett., Vol. 20, (1995), p. 2087.

Par ailleurs, il a déjà été proposé dans la demande de brevet WO 94/25 896 une structure d'oscillateur paramétrique optique comportant un cristal non linéaire, sur lequel une onde pompe est envoyée, et deux cavités définies d'une part par un miroir commun disposé d'un côté dudit cristal et d'autre part par deux autres miroirs disposés de l'autre côté dudit cristal.

Cette structure d'OPO est principalement proposée et décrite dans le cas d'un oscillateur paramétrique optique fonctionnant en régime continu, mais il y est également envisagé d'utiliser cette même structure pour le cas d'oscillateurs paramétriques optiques impulsionnels.

Toutefois, dans le cas d'un fonctionnement impulsionnel, cette structure d'OPO n'est pas pleinement satisfaisante si l'on cherche à obtenir une émission monomode.

En particulier, l'épaisseur du miroir qui - du côté opposé à la source d'émission de l'onde pompe - est interposé entre le cristal non linéaire et le miroir d'extrémité empêche, sauf arrangement particulier, de donner aux deux cavités des longueurs optiques voisines, ce qui est pourtant nécessaire si l'on souhaite obtenir un fonctionnement monomode en régime impulsionnel.

En outre, l'utilisation d'un miroir commun aux deux cavités ne permet pas un bon découplage de celles-ci dans les conditions de fort gain, qui sont celles du fonctionnement impulsionnel.

Egalement, cette structure ne permet pas, dans le cas d'une réalisation monolithique, un réglage indépendant de la longueur de l'une et l'autre des deux cavités.

OBJET DE L'INVENTION

L'invention propose quant à elle un OPO impulsionnel qui permet de pallier ces différents inconvénients.

En particulier, l'OPO impulsionnel proposé par l'invention permet une émission monomode stable ne nécessitant aucunement l'utilisation d'éléments dispersifs ou d'électronique d'asservissement.

En outre, il est d'une structure compacte, d'une grande souplesse de réglage, et d'un montage mécanique simple.

Egalement, l'arrangement optique proposé par l'invention est compatible avec les procédés de fabrication verticale ou en couches pouvant être mis en oeuvre de façon collective, et permet des coûts de fabrication réduits.

Plus particulièrement, l'invention propose un oscillateur paramétrique optique impulsionnel comportant une source spectralement pure pour l'émission impulsionnelle d'une onde pompe, un cristal non linéaire sur lequel l'onde pompe est envoyée, une cavité résonnante pour l'onde complémentaire définie par deux miroirs situés de part et d'autre du cristal, une cavité pour l'onde signal définie par deux miroirs situés de part et d'autre du cristal les differents miroirs étant alignés sur un même axe, des moyens pour ajuster la longueur de l'une et/ou l'autre des deux cavités, l'oscillateur étant de type monomode, caractérisé en ce que les deux cavités sont définies chacune par deux miroirs disposés de part et d'autre du cristal, le miroir d'entrée de la cavité qui est résonante pour l'onde signal étant disposé entre les deux miroirs de la cavité qui est résonante pour l'onde complémentaire, le miroir de sortie de la cavité qui est résonnante pour l'onde complémentaire étant disposé entre les deux miroirs de la cavité qui est résonnante pour l'onde signal.

Un tel oscillateur permet d'ajuster la longueur optique de l'une au moins des cavités de façon telle que, dans la largeur de gain paramétrique, seul un couple de modes de l'onde signal et de l'onde complémentaire vérifie l'égalité

$$\omega_p = \omega_s + \omega_c$$

où $\omega_s$, $\omega_p$ et $\omega_c$ sont les fréquences de l'onde signal, de l'onde pompe et de l'onde complémentaire.

On notera notamment que la structure proposée par l'invention permet d'ajuster comme on le souhaite la longueur optique de l'une au moins des deux cavités, en ayant la possibilité de leur donner des longueurs optiques très voisines.

Cet oscillateur est avantageusement complété par les différentes caractéristiques suivantes, prises seules ou selon toutes leurs combinaisons techniquement possibles:

- les deux miroirs intérieurs sont fixes l'un par rapport à l'autre, au moins l'un des deux miroirs extérieurs étant ajustable par rapport aux miroirs intérieurs ;
- les miroirs intérieurs ne sont pas parallèles ;
- les moyens pour ajuster les longueurs des deux cavités sont situés de part et d'autre du cristal, et permettent de régler indépendamment les longueurs optiques de ces deux cavités.
- les deux miroirs intérieurs sont fixes l'un par rapport à l'autre, les deux miroirs extérieurs étant ajustables par rapport aux miroirs intérieurs ;
- les miroirs intérieurs sont réalisés par traitement des faces du cristal ;
- chacun des moyens pour ajuster la longueur de chacune des cavités comportent un matériau électrooptique disposé sur le trajet des ondes ;
- les moyens pour ajuster la longueur de chacune des cavités sont en matériau de longueur optique variable ;
- les miroirs sont réalisés par traitement des faces des moyens pour ajuster la longueur de chacune des cavités ;
- le cristal et les moyens pour ajuster la longueur des cavités forment un seul bloc ; on dispose ainsi d'une source stable et robuste ne nécessitant aucun réglage mécanique.

D'autres caractéristiques et avantages de l'invention ressortiront encore de la description qui suit, qui est purement illustrative et non limitative.

PRESENTATION DES FIGURES

- la figure 1, déjà analysée, illustre schématiquement un oscillateur paramétrique optique simplement résonnant connu de l'art antérieur ;
- la figure 2 illustre, dans le cas d'un OPO impulsionnel, la répartition des modes de la cavité en fonction de 1a fréquence ;
- les figures 3a, 3b et 3c sont des représentations schématiques illustrant des structures d'OPO impulsionnels spectralement sélectives connues de l'art antérieur.
- la figure 4 illustre schématiquement un OPO impulsionnel conforme à un mode de réalisation possible de l'invention ;
- la figure 5 est un diagramme illustrant la superposition des modes du signal émis et du signal complémentaire dans le cas d'un OPO impulsionnel doublement résonnant du type de ceux connus de l'art antérieur, c'est-à-dire à simple cavité ;
- la figure 6 est un diagramme semblable à celui de la figure 5, pour un OPO à double cavité conforme à un mode de réalisation possible de l'invention ;
- la figure 7 est un graphe sur lequel on a superposé un mode du signal émis et un mode du signal complémentaire dans le cas d'un OPO impulsionnel conforme à un mode de réalisation possible de l'invention ;
- les figures 8, 9 et 10 sont des représentations schématiques en coupe de trois OPO conformes à trois modes de réalisation possibles de l'invention.

DESCRIPTION DETAILLEE DE L'INVENTION

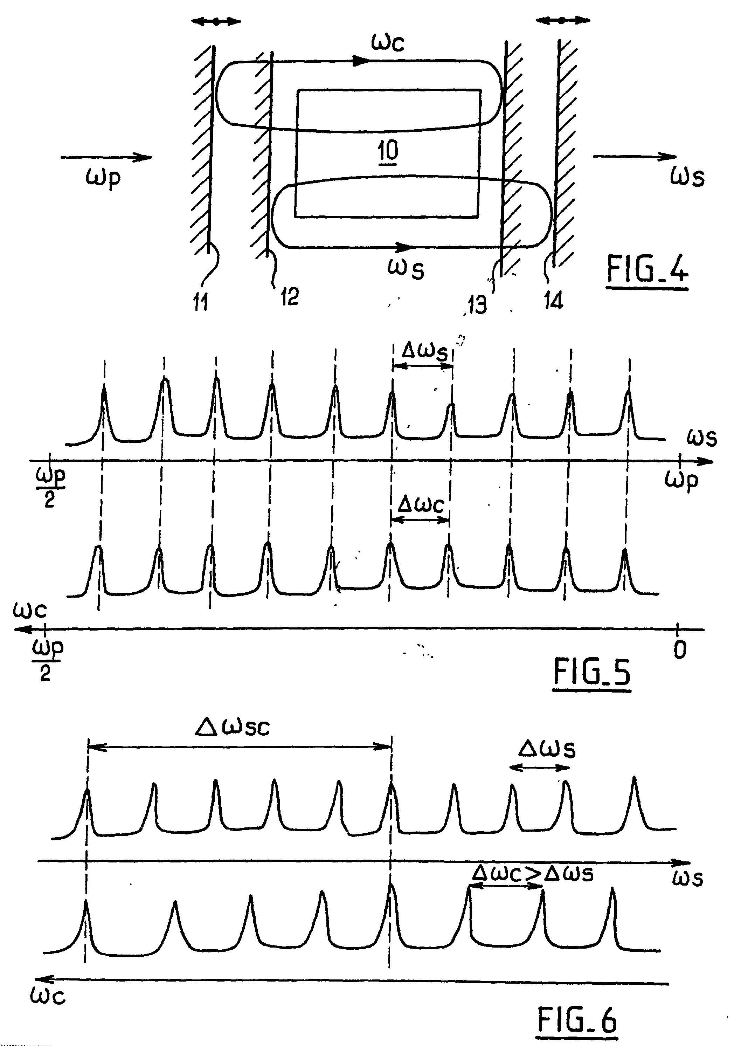

L'oscillateur paramétrique optique illustré sur la figure 4 présente une configuration doublement résonnante qui est définie par deux cavités, imbriquées l'une dans l'autre, qui contiennent dans leur partie commune un cristal 10 non linéaire d'ordre 2.

L'une des cavités est totalement réfléchissante à la longueur d'onde complémentaire (fréquence $\omega_c$), l'autre étant partiellement réfléchissante à la longueur d'onde du signal (fréquence $\omega_s$). Le couplage entre les différentes ondes est réalisé dans la partie centrale de l'OPO où le cristal non linéaire 10, traversé par l'onde de pompe ($\omega_p$), assure le gain paramétrique.

Ces deux cavités sont définies par quatre miroirs coaxiaux, les deux miroirs qui définissent la cavité qui est résonnante à la longueur d'onde complémentaire ayant été référencés par 11 et 13, les deux autres miroirs ayant été référencés par 12 et 14.

Ces différents miroirs 11 à 14 sont transparents à la longueur d'onde pompe (fréquence $\omega_p$).

Les miroirs 12 et 13 sont les miroirs intérieurs et sont maintenus fixes l'un par rapport à l'autre.

Les miroirs 11 et 14 sont les miroirs extérieurs, le miroir 11 étant celui de ces deux miroirs par lequel l'onde pompe entre dans les cavités, le miroir 14 constituant le miroir de sortie de l'oscillateur et étant à cet effet semi-réfléchissant de façon à permettre l'extraction d'une partie du faisceau signal (ωs).

Ces miroirs extérieurs 11 et 14 peuvent être translatés séparément par rapport aux miroirs 12 et 13 pour ajuster chaque longueur de cavité.

Les deux cavités ainsi définies peuvent fonctionner en géométrie plan/plan ou plan/concave (configuration semi-confocale).

Pour cette dernière configuration, les miroirs 12 et 13 sont choisis plans, tandis que les miroirs 11 et 14 sont choisis concaves, les rayons de courbure de ces miroirs pouvant être différents pour assurer dans le cristal un bon recouvrement des différents faisceaux.

Cette structure à double cavité permet, mieux que tout autre configuration, d'obtenir des longueurs géométriques de cavités signal et complémentaire à la fois proches de celle du cristal et ajustables séparément.

Le principe de fonctionnement d'un OPO impulsionnel du type de celui illustré sur la figure 4 va maintenant être décrit.

Les fréquences émises correspondent au cas où les quatre conditions suivantes sont vérifiées simultanément :

- pour l'onde signal, la fréquence ωs correspond à un mode longitudinal de la cavité signal ;
- pour l'onde complémentaire, la fréquence ωc correspond à un mode longitudinal de la cavité complémentaire ;
- chaque couple de modes doit vérifier la relation (1);
- seules les fréquences situées dans la largeur de gain oscillent.

La détermination de ces fréquences ωs et ωp peut être entreprise graphiquement au moyen d'un diagramme du type de celui illustré sur la figure 5 dans le cas d'un OPO impulsionnel doublement résonnant conforme à l'art antérieur, c'est à dire à cavité unique. Les diagrammes de ce type - introduits par Giordmaine et Miller - sont par exemple présentés dans la publication suivante :

[9] "Mode selection in doubly-resonant optical parametric oscillators", Padgett M.J. and al., IEEE Journal of quantum electronics, Vol. 30, N° 12, Décembre 1994, p. 2979.

Sur ces diagrammes, la position des modes d'une part de l'onde signal et d'autre part de l'onde complémentaire est portée sur deux axes horizontaux disposés l'un en dessous de l'autre et de sens opposés : sur le premier axe, on porte de gauche à droite les fréquences de l'onde signal dans le sens croissant de ωp/2 jusqu'à ωp ; sur le deuxième axe, on porte de gauche à droite les fréquences du signal complémentaire dans le sens décroissant de ωp/2 jusqu'à 0.

De cette manière, les fréquences $\omega_s$ et $\omega_c$ situées sur la même verticale sont celles qui vérifient l'égalité $\omega_s + \omega_c = \omega_p$.

Dans le cas (figure 5 illustrant l'art antérieur) d'un OPO doublement résonnant à cavité unique, les écarts $\Delta\omega_s$ et $\Delta\omega_c$ de fréquences entre modes d'une part pour le signal de sortie et d'autre part pour le signal complémentaire sont très voisins ($\Delta\omega_s \, \Delta\omega_c$). En effet, dans la cavité, les trajets de l'onde signal et de l'onde complémentaire ne diffèrent que par la dispersion dans le cristal. Un grand nombre de modes vérifient l'égalité (1) et sont susceptibles d'osciller, de sorte que le rayonnement émis par l'OPO est alors multimode.

Avec la structure illustrée sur la figure 4, il est possible d'ajuster la position relative des miroirs 11 et 14 et d'obtenir des cavités de longueurs suffisamment différentes pour que tout chevauchement entre couples de modes voisins soit supprimé. Dans ce cas, les couples de modes permis deviennent très largement séparés (figure 6) et l'on montre (voir annexe I) que pour des cavités signal et complémentaire de même finesse, l'écart entre ces couples noté $\Delta\omega_{sc}$ dépend des longueurs optiques des cavités signal et complémentaire, notées $L_s$ et $L_c$ respectivement, suivant la relation :

$$\Delta\omega_{sc} = \frac{F \, \pi c}{\dfrac{L_s + L_c}{2}} \qquad (4)$$

L'expression (4) montre que l'écartement des résonances de l'OPO proposé dans l'invention est F fois supérieur à l'espacement des modes d'un OPO simplement résonnant dont la longueur optique serait la moyenne de celles des cavités signal et complémentaire.

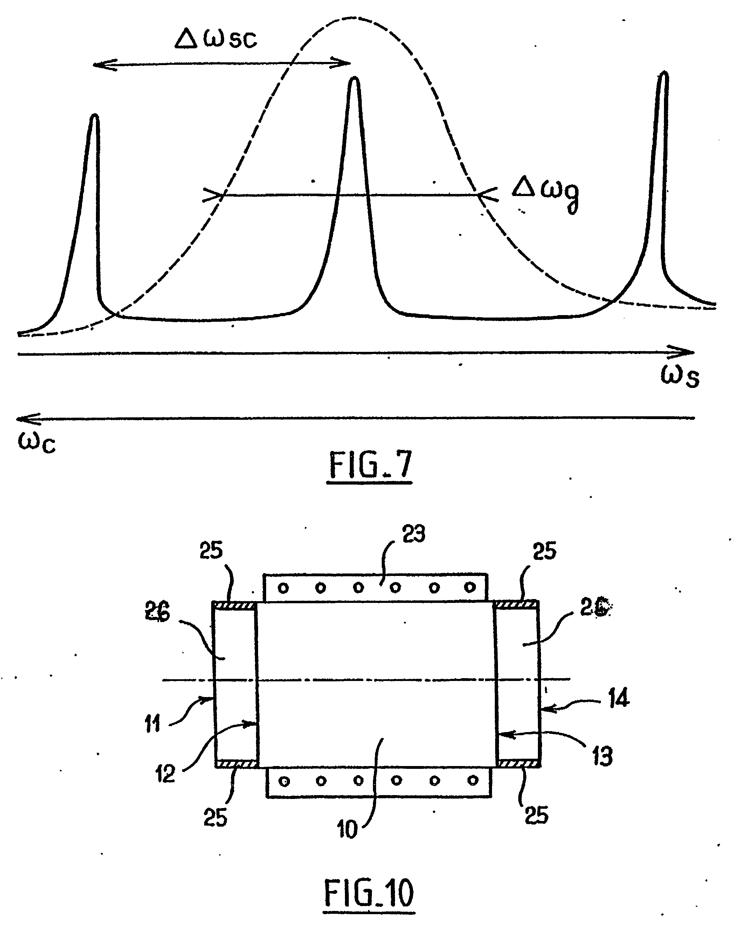

Dès lors, un fonctionnement monomode est obtenu, ainsi qu'illustré sur la figure 7, lorsqu'il n'existe qu'un seul couple de modes ($\omega_s$, $\omega_c$) vérifiant l'égalité (1) à l'intérieur de la largeur de gain paramétrique, ce qui se traduit

par la condition :

$$\Delta\omega_{sc} > \Delta\omega_g \qquad\qquad (5)$$

où $\Delta\omega_g$ est la largeur de gain paramétrique.

On définit la largeur de gain paramétrique comme étant l'étendue spectrale pour laquelle le gain excède les pertes de la cavité.

Ainsi, pour des valeurs typiques du coefficient de finesse (10 à 20) et de largeur de raie (0,2 à 0,3 nm), on obtient un fonctionnement monomode pour des longueurs moyennes de cavités de l'ordre du centimètre, les longueurs étant différentes de l'ordre de 10 %.

Le cristal 10 est alors d'une faible épaisseur (quelques millimètres) conduisant à une amplification paramétrique limitée.

Toutefois, la configuration doublement résonnante permet d'assurer un gain suffisant pour compenser la faible longueur du cristal.

En outre, l'espace entre les miroirs étant occupé au maximum par le cristal, la conversion paramétrique est effective sur toute la longueur disponible.

Ainsi, la structure d'OPO proposée par l'invention est la configuration optimale permettant d'obtenir un gain maximal pour un résonateur court ayant des longueurs de cavités signal et/ou complémentaire ajustables.

Par ailleurs, les quatre miroirs 11 à 14 de la structure illustrée sur la figure 4 étant alignés sur un même axe, le montage de l'OPO est simple, il peut être monobloc et par conséquent très stable.

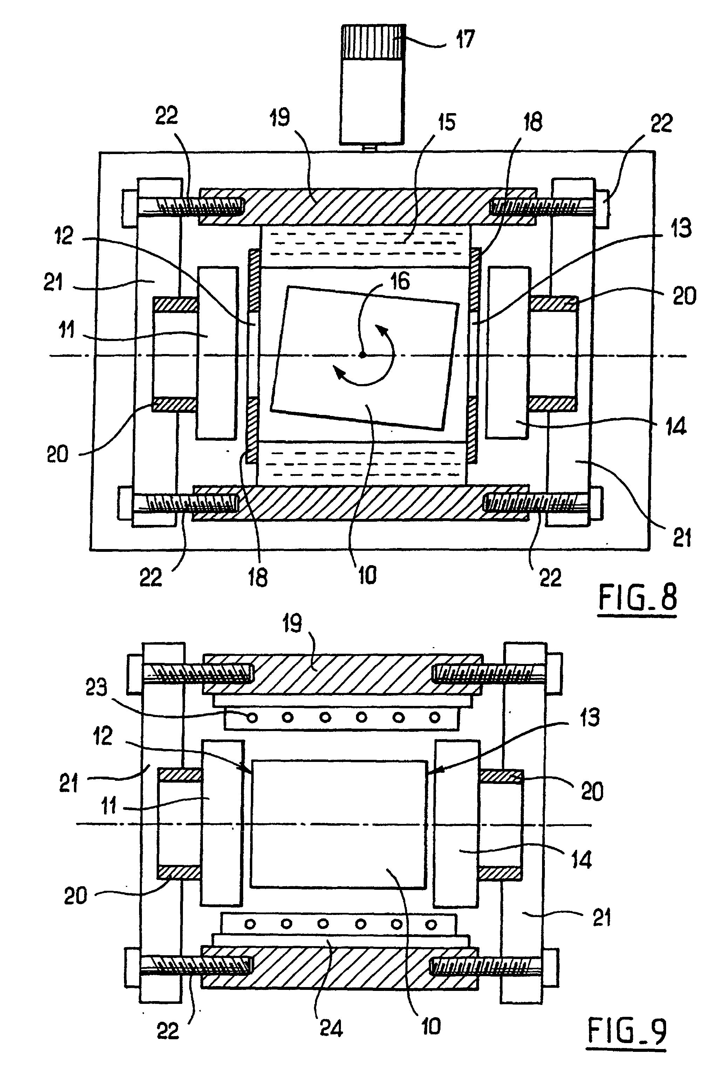

Un mode de réalisation détaillé de l'invention est illustré sur la figure 8. Dans ce mode de réalisation, la fréquence est accordée en tournant le cristal 10.

A cet effet, le cristal 10 est monté dans un cylindre de zérodur 15 par rapport auquel il est articulé en pivotement autour d'un axe médian 16 perpendiculaire à l'axe dudit cylindre 15 ; son orientation est ajustable au moyen d'une platine de rotation de grande résolution angulaire (1/1000 de degré) actionnée par l'opérateur au moyen d'une vis 17.

Les miroirs intérieurs 12 et 13 sont choisis de faibles épaisseurs (1 mm) afin de réduire au maximum la longueur interne de l'OPO. Compte tenu de cette faible épaisseur, le diamètre de chacun des deux miroirs 12 et 13 est limité à 8 mm de façon à assurer une bonne planéité de leurs faces.

Les traitements des miroirs 11 à 14 sont choisis pour bien découpler les cavités.

Le miroir 12 a un coefficient de réflexion supérieur à 95 % à la longueur d'onde signal comprise entre 570 et 620 nm, sa transmission étant maximale à la fréquence complémentaire (entre 830 et 940 nm) ; ; à l'inverse, la réflexion et la transmission du miroir 13 sont maximales, respectivement aux longueurs d'ondes complémentaire et signal. Pour limiter les pertes par transmission, un traitement antireflet est déposé sur la face arrière de chacun des miroirs 11 à 14.

Ces miroirs 12 et 13 ferment le cylindre 15 de zérodur à chacune de ses extrémités en étant maintenus par rapport à celui-ci au moyen de deux bagues annulaires plates 18 collées sur les tranches dudit cylindre 15. La liaison entre les miroirs 12 et 13 et les bagues 18 est aussi réalisée par collage, au moyen d'une colle souple au silicone pour éviter toutes contraintes mécaniques des miroirs intérieurs.

Le cylindre 15 en zérodur est légèrement prismatique (20 minutes d'angle) ainsi les miroirs 12 et 13 ne sont pas parallèles pour s'affranchir d'éventuelles réflexions parasites.

Le cylindre 15 est ajusté dans un cylindre 19 en invar, dont le diamètre intérieur correspond au diamètre externe du cylindre 15.

Du fait de leur faible coefficient de dilatation, le zérodur et l'invar permettent d'assurer une bonne stabilité thermique des longueurs de cavité.

Les miroirs extérieurs 11 et 14 sont montés sur l'une et l'autre des extrémités du cylindre 19. Leurs dimensions ne sont pas aussi déterminantes que les dimensions des miroirs 12 et 13.

Le miroir 11, associé à la cavité complémentaire, a les mêmes caractéristiques spectrales que le miroir 13.

Pour assurer l'extraction de l'énergie utile, le miroir 14 ne réfléchit que 60 % du rayonnement signal (rayonnement dont la longueur d'onde est comprise entre 570 et 620 nm), sa transmission est supérieure à 95% entre 830 et 940 nm.

Les miroirs extérieurs 11 et 14 sont collés sur des cales piézoélectriques 20 maintenues aux extrémités du cylindre 19 en invar par deux platines orientables 21.

L'orientation de chaque miroir 11 et 14 est ajustée précisément par des vis micrométriques 22. La longueur de chaque cavité est réglée finement à l'aide des cales piézoélectriques 20. On notera que l'orientation des miroirs 11 et 14 ainsi que le réglage en longueur des cavités peuvent être assurés de la même façon par des cales piézoélectriques disposées autour du cylindre en zérodur pour atteindre une compacité maximale.

Lors du montage des miroirs extérieurs 11 et 14, les cales piézoélectriques 20 sont placées de façon à obtenir une différence de longueur optique entre les deux cavités de typiquement 10 %. Ceci est obtenu en rentrant plus ou moins profondément les cales 20 dans les platines orientables 21.

Le cristal 10 est par exemple un cristal de β borate de baryum (BBO) fonctionnant en accord de phase de type II ($\theta = 40°$, $\emptyset = 30°$), sa section est de 5 x 6 mm$^2$, sa longueur est de 6mm. Il est pompé par un laser Nd:YAG monomode triplé en fréquence, la longueur d'onde de pompe est ainsi de 355 nm. Pour couvrir le domaine visible entre 570 et 620nm, l'axe du cristal est incliné de $\pm 4°$ par rapport à l'incidence normale. Ceci est rendu possible en plaçant les miroirs intérieurs 12 et 13 à 0,5 mm des faces du cristal.

Un autre mode de réalisation possible est représenté sur la figure 9.

Dans ce mode de réalisation, l'accord de la longueur d'onde est obtenu en ajustant la température du cristal et est constituée d'un enroulement de résistance blindée d'un type commercialisée par la société THERMOCOAX sous la dénomination "élément chauffant". L'enceinte 23 est thermiquement isolée de l'extérieur par un cylindre en téflon 24 et sa température est régulée au 1/100 de degré. Il est à noter que le forme cylindrique de l'enceinte 23 assure un chauffage homogène du cristal.

L'enceinte 23 et le cylindre d'isolation 24 sont montés dans un cylindre 19 en invar semblable à celui de la variante de la figure 8, les miroirs 11 et 14 étant montés sur ce cylindre 19 par l'intermédiaire de cales piézoélectriques 20, de platines orientables 21 et de vis micrométriques 22.

Dans ce second mode de réalisation, les traitements des miroirs 12 et 13 sont réalisés directement sur les faces du cristal non linéaire 10 qui est légèrement prismatique pour éviter les réflexions parasites. Les longueurs des cavités signal et complémentaire, tout en restant réglables séparément, sont ainsi aussi courtes que dans une configuration simplement résonnante. On dispose par conséquent d'une géométrie optimale pour atteindre le fonctionnement monomode avec le moins de pertes.

Dans un troisième mode de réalisation, représenté sur la figure 10, tout réglage mécanique a été supprimé en déposant directement sur les faces du cristal 10 deux disques 26, réalisés dans un matériau électrooptique tel que le tantalate de lithium ($LiTaO_3$).

La variation de longueur optique de chaque cavité est alors obtenue en appliquant un champ électrique par l'intermédiaire d'électrodes 25, disposées perpendiculairement à l'axe des disques 26.

L'épaisseur de chaque disque 26 est choisie pour différencier les longueurs optiques des cavités signal et complémentaire de typiquement 10 %.

Ces disques 26 sont maintenus sur les faces du cristal suivant les techniques connues de l'art en ce domaine (collage ou adhérence moléculaire).

Le parallélisme entre les miroirs 11 et 13 d'une part, 12 et 14 d'autre part, est obtenu par polissage des faces du cristal 10 et des disques 26, avant assemblage.

Les traitements diélectriques permettant d'obtenir les miroirs 11 à 14 sont réalisés sur les faces du cristal 10 et sur les faces extérieures des disques 26 ou alors directement sur chaque face des disques 26, limitant ainsi à deux le nombre de pièces à traiter.

Après assemblage du cristal 10 et des disques 26, l'oscillateur paramétrique monobloc obtenu est disposé dans une enceinte de four 23 régulée en température.

Ajoutons que l'oscillateur paramétrique optique ainsi réalisé pourra être juxtaposé en sortie d'un microlaser de pompage pour atteindre une compacité maximale. On obtiendra alors une source entièrement monolithique en suivant les procédures de fabrication dans le document [10] EP 742 614.

Bien entendu, selon la plage de fonctionnement souhaitée pour l'OPO, d'autres traitements des miroirs et de cristaux non linéaires peuvent être utilisés. Par exemple, pour couvrir l'infrarouge proche et le visible, on utilisera avantageusement les cristaux non organiques suivants :

- phosphate de potassium de titanyle (KTP) et β borate de baryum (BBO) pour le premier mode de réalisation;
- niobate de potassium ($KNbO_3$) et triborate de lithium (LBO) pour les second et troisième modes de réalisation.

Avec des montages du type de ceux illustrés sur les figures 8,9 et 10, on ajuste la longueur d'onde de l'OPO en deux temps. Dans un premier temps, on réalise un premier ajustement grossier en tournant le cristal (mode de réalisation de la figure 8) ou en ajustant la température du four (mode de réalisation des figures 9 et 10). Lorsque la longueur d'onde d'utilisation est ajustée grossièrement à la valeur choisie, on l'accorde finement et continûment en changeant les longueurs de chaque cavité au moyen des cales piézoélectriques 20 ou disques électrooptiques 26 supportant les miroirs extérieurs 11 et 14. Ainsi, on déplace dans la largeur de gain la position du couple de mode résonnant ($\omega_s$, $\omega_c$) et donc la fréquence émise.

Pour un accord continu de la longueur d'onde, les déplacements des miroirs 11 et 14 sont effectués dans la même direction et dans un rapport qui dépend des longueurs optiques des cavités signal ($L_s$) et complémentaire ($L_c$) et de la fréquence d'émission $\omega_s$. On montre également (voir annexe II) qu'il existe un domaine d'utilisation où l'accordabilité peut être obtenue simplement, en effectuant une translation du cylindre en invar par rapport à la partie interne de l'OPO (pour les deux premiers modes de réalisation).

Comme on l'aura compris, les structures d'OPO impulsionnels du type de celles décrites en référence aux figures 8, 9 et 10 présentent de nombreux avantages.

Elles sont d'une réalisation mécanique simple.

Elles permettent en outre d'assurer une bonne stabilité de la source :

- mécaniquement, du fait de la compacité du montage (les dimensions extérieures sont de 20 mm en diamètre et 50 mm en longueur pour les deux premiers modes de réalisation) ou du montage monobloc pour le troisième mode de réalisation ;
- et également thermiquement, notamment de part les matériaux utilisés : invar et zérodur.

Ces qualités conduisent à un coût de fabrication réduit pour une source monomode, stable en énergie et en fréquence, ne nécessitant pas d'élément dispersif ni d'électronique d'asservissement des longueurs de cavité.

ANNEXE I

ESPACEMENT DES RESONANCES DE L'OPO PROPOSE DANS L'INVENTION

L'espacement des résonances : $\Delta\omega_{sc}$ est donné par la double égalité :

$$\Delta\omega_{sc} = k\,\Delta\omega_c = (k+1)\,\Delta\omega_s \qquad (AI.1)$$

dans le cas où $\Delta\omega_c > \Delta\omega_s$

où k est le nombre de modes de la cavité signal qui sépare les deux coïncidences successives pour lesquelles $\omega_s$ et $\omega_c$ sont simultanément en résonance (voir figure 6).

L'égalité (AI.1) conduit à :

$$\Delta\omega^{sc} = \frac{\Delta\omega^s \Delta\omega^c}{\Delta\omega^s - \Delta\omega^c} \qquad (AI.2)$$

$\Delta\omega_{sc}$ sera donc maximal pour $(\Delta\omega_s - \Delta\omega_c)$ minimal, soit pour éviter tout chevauchement entre deux modes successifs, en prenant :

$$\Delta\omega_s - \Delta\omega_c = \frac{\delta\omega_s + \delta\omega_c}{2} \qquad (AI.3)$$

Si on suppose que les cavités signal et complémentaire ont la même finesse F, alors l'expression (AI.2) s'écrit :

$$\Delta\omega_{sc} = 2F\frac{\Delta\omega^s \Delta\omega^c}{\Delta\omega^s + \Delta\omega^c} \qquad (AI.4)$$

Compte tenu des expressions de $\Delta\omega_s$ et $\Delta\omega_c$ (relation (2)), on obtient :

$$\Delta\omega_{sc} = F\frac{\pi C}{\frac{L_s + L_c}{2}} \qquad (AI.5)$$

ANNEXE II

ACCORDABILITE EN FREQUENCE

Pour accorder la fréquence émise par l'OPO sur un domaine limité, typiquement < 1 nm, il suffit de changer simultanément la longueur optique de chaque cavité de façon à maintenir l'égalité des fréquences :

$$\omega_s + \omega_c = \omega_p \tag{AII.1}$$

Les variations de longueur sont reliées aux variations en fréquence par :

$$\frac{\partial L_s}{L_s} = -\frac{\partial \omega_s}{\omega_s}$$

$$\text{et} \tag{AII.2}$$

$$\frac{\partial L_c}{L_c} = -\frac{\partial \omega_c}{\omega_c}$$

Des expressions (AII.1) et (AII.2), on obtient :

$$\frac{\partial L_s}{\partial L_c} = -\frac{L_s\omega_c}{L_c\omega_s} \tag{AII.3}$$

Cette expression montre que, si les longueurs optiques des cavités sont dans le rapport des fréquences signal et complémentaire, alors il est possible d'accorder continûment la fréquence émise par l'OPO en changeant la longueur de chaque cavité de la même quantité mais en sens opposés. Pour l'OPO proposé dans l'invention, cela revient à translater les miroirs 11 et 14 dans la même direction, c'est-à-dire à déplacer le cylindre en invar 19 par rapport à la partie centrale (voir figures 8 et 9).

**Revendications**

1. Oscillateur paramétrique optique impulsionnel comportant une source spectralement pure pour l'émission impulsionnelle d'une onde pompe, un cristal non linéaire (10) sur lequel l'onde pompe est envoyée, une cavité résonnante pour l'onde complémentaire définie par deux miroirs (11, 13) situés de part et d'autre du cristal, une cavité pour l'onde signal définie par deux miroirs (12, 14) situés de part et d'autre du cristal, les differents miroirs étant alignés sur un même axe, des moyens (20, 22, 26) pour ajuster la longueur de l'une et/ou l'autre des deux cavités, l'oscillateur étant de type monomode, **caractérisé en ce que** le miroir d'entrée (12) de la cavité qui est résonante pour l'onde signal est disposé entre les deux miroirs (11, 13) de la cavité qui est résonante pour l'onde complémentaire, et **en ce que** le miroir de sortie (13) de la cavité qui est résonnante pour l'onde complémentaire est disposé entre les deux miroirs (12, 14) de la cavité qui est résonnante pour l'onde signal.

2. Oscillateur selon la revendication 1, **caractérisé en ce que** les deux miroirs intérieurs (12, 13) sont fixes l'un par rapport à l'autre, au moins l'un des deux miroirs extérieurs (11, 14) étant ajustable par rapport aux miroirs intérieurs.

3. Oscillateur selon la revendication 1, **caractérisé en ce que** les miroirs intérieurs ne sont pas parallèles.

4. Oscillateur selon la revendication 1, **caractérisé en ce qu'**il comporte des moyens pour ajuster les longueurs des deux cavités, ces moyens étant situés de part et d'autre du cristal.

5. Oscillateur selon la revendication 4, **caractérisé en ce que** les deux miroirs intérieurs (12, 13) sont fixes l'un par rapport à l'autre, les deux miroirs extérieurs (11, 14) étant ajustables par rapport aux miroirs intérieurs.

6. Oscillateur selon la revendication 5, **caractérisé en ce que** les miroirs intérieurs sont réalisés par traitement des faces du cristal.

**7.** Oscillateur selon la revendication 5, **caractérisé en ce que** chacun des moyens pour ajuster la longueur de chacune des cavités est disposé entre les deux miroirs situés d'un même côté du cristal.

**8.** Oscillateur selon la revendication 7, **caractérisé en ce que** les moyens pour ajuster la longueur de chacune des cavités comportent un matériau électrooptique disposé sur le trajet des ondes.

**9.** Oscillateur selon la revendication 8, **caractérisé en ce que** les miroirs extérieurs sont réalisés par traitement diélectrique des faces de disques électrooptiques.

**10.** Oscillateur selon la revendication 8, **caractérisé en ce que** le cristal et les moyens pour ajuster la longueur des cavités forment un seul bloc.

**Claims**

**1.** A pulsed optical parametric oscillator comprising a spectrally pure source for emitting pumping wave pulses, a non-linear crystal (10) to which the pumping wave is applied, a resonant cavity for the complementary wave defined by two mirrors (11, 13) situated on opposite sides of the crystal, a cavity for the signal wave defined by two mirrors (12, 14) situated on opposite sides of the crystal, the various mirrors being aligned on the same axis, and means (20, 22, 26) for adjusting the length of one or both cavities, the oscillator being of monomode type, the oscillator being **characterized in that** the inlet mirror (12) of the cavity which is resonant for the signal wave is disposed between the two mirrors (11, 13) of the cavity which is resonant for the complementary wave, and **in that** the outlet mirror (13) of the cavity which is resonant for the complementary wave is disposed between the two mirrors (12, 14) of the cavity which is resonant for the signal wave.

**2.** An oscillator according to claim 1, **characterized in that** the two inner mirrors (12, 13) are fixed relative to each other, at least one of the two outer mirrors (11, 14) being adjustable relative to the inner mirrors.

**3.** An oscillator according to claim 1, **characterized in that** the inner mirrors are not parallel.

**4.** An oscillator according to claim 1, **characterized in that** it includes means for adjusting the lengths of the two cavities, the means being situated on opposite sides of the crystal.

**5.** An oscillator according to claim 4, **characterized in that** the two inner mirrors (12, 13) are fixed relative to each other, the two outer mirrors (11, 14) being adjustable relative to the inner mirrors.

**6.** An oscillator according to claim 5, **characterized in that** the inner mirrors are made by treating the faces of the crystal.

**7.** An oscillator according to claim 5, **characterized in that** each of the means for adjusting the length of each cavity is disposed between the two mirrors situated on the same side of the crystal.

**8.** An oscillator according to claim 7, **characterized in that** the means for adjusting the length of each cavity include an electro-optical material disposed on the path of the waves.

**9.** An oscillator according to claim 8, **characterized in that** the outer mirrors are made by applying dielectric treatment to the faces of electro-optical disks.

**10.** An oscillator according to claim 8, **characterized in that** the crystal and the means for adjusting the lengths of the cavities constitute a single block.

**Patentansprüche**

**1.** Gepulster optischer parametrischer Oszillator, der eine spektralreine Quelle für die gepulste Emission einer Pumpwelle, einen nicht-linearen Kristall (10), an den die Pumpwelle gesendet wird, eine Resonanzkavität für die komplementäre Welle, die durch zwei Spiegel (11, 13) definiert ist, die beiderseits des Kristalls gelegen sind, eine Kavität für die Signalwelle, die durch zwei Spiegel (12, 14) definiert ist, die beiderseits des Kristalls gelegen sind, wobei die verschiedenen Spiegel auf der gleichen Achse ausgerichtet sind, Mittel (20, 22, 26) zum Einstellen der Länge der einen und/oder der anderen der beiden Kavitäten umfaßt, wobei der Oszillator ein Monomode-Oszillator ist, **dadurch gekennzeichnet, daß** der Eingangsspiegel (12) der Kavität, die für die Signalwelle resonant ist, zwischen den beiden Spiegeln (11, 13) der Kavität angeordnet ist, der für die komplementäre Welle resonant ist, und daß der Ausgangsspiegel (13) der Kavität, die für die komplementäre Welle resonant ist, zwischen den beiden Spiegeln (12, 14) der Kavität angeordnet ist, die für die Signalwelle resonant ist.

2. Oszillator nach Anspruch 1, **dadurch gekennzeichnet, daß** die beiden inneren Spiegel (12, 13) zueinander fixiert sind, und wenigstens einer der beiden äußeren Spiegel (11, 14) bezüglich der inneren Spiegel einstellbar ist.

3. Oszillator nach Anspruch 1, **dadurch gekennzeichnet, daß** die inneren Spiegel nicht parallel sind.

4. Oszillator nach Anspruch 1, **dadurch gekennzeichnet, daß** er Mittel zum Einstellen der Längen der beiden Kavitäten aufweist, wobei diese Mittel beiderseits des Kristalls liegen.

5. Oszillator nach Anspruch 4, **dadurch gekennzeichnet, daß** die beiden inneren Spiegel (12, 13) zueinander fixiert sind, und die beiden äußeren Spiegel (11, 14) bezüglich der inneren Spiegel einstellbar sind.

6. Oszillator nach Anspruch 5, **dadurch gekennzeichnet, daß** die inneren Spiegel durch eine Oberflächenbehandlung des Kristalls hergestellt sind.

7. Oszillator nach Anspruch 5, **dadurch gekennzeichnet, daß** jedes der Mittel zum Einstellen der Länge jeder der Kavitäten zwischen den beiden Spiegeln angeordnet ist, die auf der gleichen Seite des Kristalls liegen.

8. Oszillator nach Anspruch 7, **dadurch gekennzeichnet, daß** die Mittel zum Einstellen der Länge jeder der Kavitäten ein elektrooptisches Material umfassen, das auf dem Wellenpfad angeordnet ist.

9. Oszillator nach Anspruch 8, **dadurch gekennzeichnet, daß** die Außenspiegel durch eine dielektrische Oberflächenbehandlung elektrooptischer Scheiben hergestellt sind.

10. Oszillator nach Anspruch 8, **dadurch gekennzeichnet, daß** der Kristall und die Mittel zum Einstellen der Länge der Kavitäten einen einzelnen Block bilden.

FIG.1

FIG.2

FIG.3a

FIG.3b

FIG.3c

FIG.4

FIG.5

FIG.6

$\Delta\omega_{sc}$

$\Delta\omega_g$

$\omega_s$

$\omega_c$

## FIG.7

## FIG.10

FIG. 8

FIG. 9